# EUROPEAN PATENT APPLICATION

(11) **EP 4 811 095 A1**
(43) Date of publication of application: **23.09.2026**
(21) Application number: 24907726.4
(22) Date of filing: 22.10.2024
(51) Int. Cl.: G06F 3/0484, G06F 1/16, G06F 3/01, G01P 15/18, G06F 3/14, H04W 4/80

(54) **WEARABLE DEVICE FOR CONTROLLING DISPLAY ON BASIS OF MOTION OF USER**

(30) Priority: 18.12.2023 KR 20230185239; 02.01.2024 KR 20240000592
(71) Applicant: Samsung Electronics Co., Ltd., Suwon-si, Gyeonggi-do 16677 (KR)
(72) Inventor: IM, Byungjai, Suwon-si Gyeonggi-do 16677 (KR); KIM, Jeongseob, Suwon-si Gyeonggi-do 16677 (KR); YOON, Sangil, Suwon-si Gyeonggi-do 16677 (KR); JO, Yeonho, Suwon-si Gyeonggi-do 16677 (KR); HAN, Yonggil, Suwon-si Gyeonggi-do 16677 (KR)
(74) Representative: Gulde & Partner
(86) International application number: PCT/KR2024/016075
(87) International publication number: WO 2025/135441

(57) **Abstract**

A wearable device according to an embodiment may comprise: a display including a first region and a second region extending from the first region and configured to at least partially surround a wrist of a user while the wearable device is worn on the user; at least one sensor for detecting a motion of the user; a memory for storing instructions; and a processor. The instructions may, when executed by the processor, cause the wearable device to: execute a function for screen transition of the display on the basis of identifying a first motion of a user detected through the at least one sensor while visual information is displayed in the first region; and display visual information in the second area on the basis of identifying a second motion of the user after the first motion detected through the at least one sensor.

## Description

### [Technical Field]

The present disclosure relates to a wearable device for controlling a display based on a motion of a user.

### [Background Art]

A wearable device, such as a smart watch, may be used while being worn on a part of a body of a user. The wearable device may include a display for displaying visual information. To meet the needs of the user, the wearable device may provide a plurality of areas in which visual information is displayed on the display. For example, the wearable device may include a flexible display including a plurality of areas in which visual information is displayed.

The above-described information may be provided as related art for the purpose of helping the understanding of the present disclosure. No assertion or determination is raised as to whether any of the above-described content may be applied as prior art related to the present disclosure.

### [Disclosure]

### [Technical Solution]

A wearable device is disclosed. According to an embodiment, the wearable device may comprise a housing, and a display including a first area coupled to the housing and a second area extending from the first area and configured to at least partially surround a wrist of a user while the wearable device is worn by the user. The wearable device may comprise at least one sensor to detect a motion of the user, memory storing instructions, and a processor. The instructions, when executed by the processor, may cause the wearable device to, based on identifying a first motion of the user detected via the at least one sensor while visual information is displayed in the first area, execute a function for switching a screen of the display. The instructions, when executed by the processor, may cause the wearable device to, based on identifying a second motion of the user after the first motion detected via the at least one sensor, display the visual information in the second area.

A wearable device is disclosed. According to an embodiment, the wearable device may comprise a display including a first area and a second area extending from the first area and configured to at least partially surround a wrist of a user while the wearable device is worn by the user. The wearable device may comprise at least one sensor to detect a motion of the user, memory storing instructions, and a processor. The instructions, when executed by the processor, may cause the wearable device to, based on identifying a first motion corresponding to a grab of the user detected via the at least one sensor while visual information is displayed in the first area, execute a function for switching a screen of the display. The instructions, when executed by the processor, may cause the wearable device to, based on identifying a second motion corresponding to rotation of the wrist of the user in a first rotation direction after the first motion detected via the at least one sensor, display the visual information in the second area.

### [Description of the Drawings]

FIG. 1 is a block diagram of an electronic device in a network environment according to various embodiments.
FIG. 2A is a perspective view of a front side of a wearable device according to an embodiment.
FIG. 2B is a perspective view of a rear side of the wearable device of FIG. 2A.
FIG. 3 is an exploded perspective view of the wearable device of FIG. 2A.
FIG. 4A is a block diagram of an exemplary wearable device.
FIG. 4B is a top plan view of an exemplary wearable device.
FIG. 4C illustrates the exemplary wearable device of FIG. 4B.
FIG. 4D is a top plan view of an exemplary wearable device.
FIG. 4E illustrates the exemplary wearable device of FIG. 4D.
FIGS. 5A, 5B, 5C, and 5D illustrate an operation of an exemplary wearable device.
FIGS. 6A, 6B, 6C, and 6D illustrate an operation of an exemplary wearable device.
FIGS. 7A and 7B illustrate an operation of an exemplary wearable device.
FIG. 8 is a flow chart illustrating operations of an exemplary wearable device.

### [Mode for Invention]

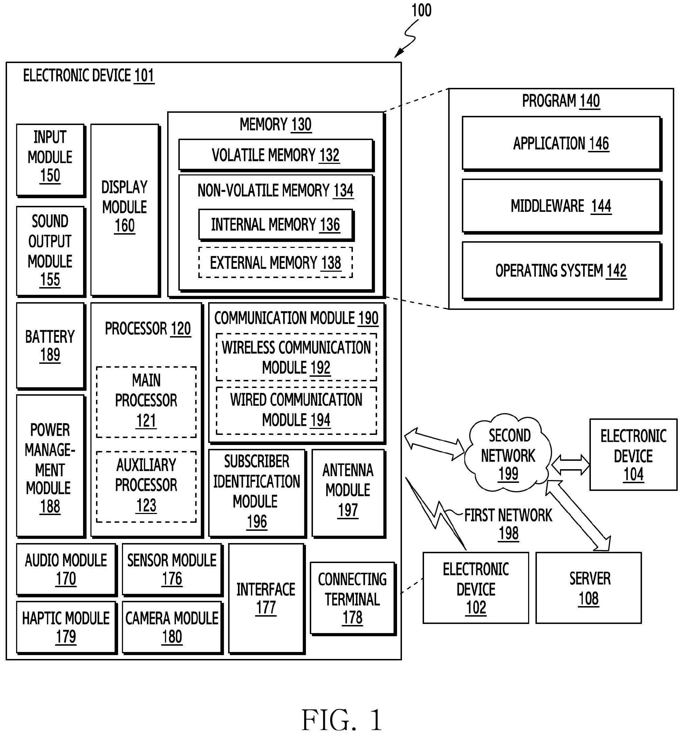

FIG. 1 is a block diagram of an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

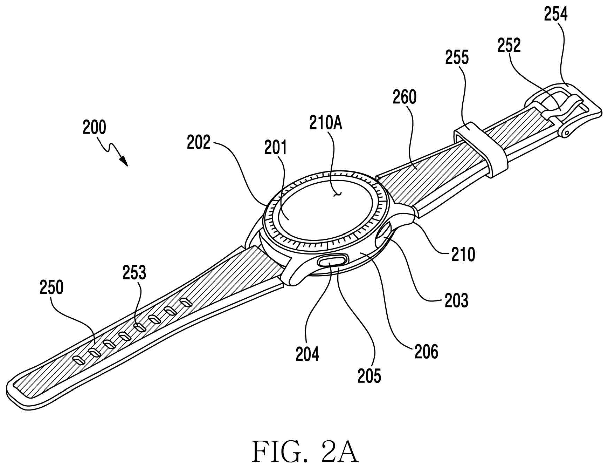

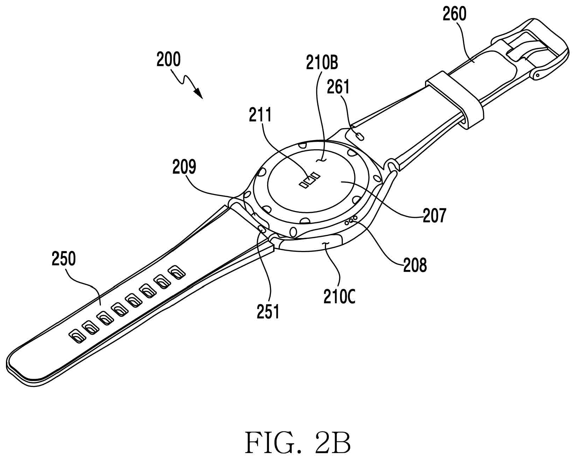

FIG. 2A is a perspective view of a front side of a wearable device according to an embodiment. FIG. 2B is a perspective view of a rear side of the wearable device of FIG. 2A.

Referring to FIGS. 2A and 2B, a wearable device 200 according to an embodiment may include a housing 210 including a front side 210A, a rear side 210B, and a lateral side 210C surrounding a space between the front side 210A and the rear side 210B, and fastening members 250 and 260 connected to at least a portion of the housing 210 and configured to detachably fasten the wearable device 200 to a body part (e.g., a wrist or an ankle) of a user. In another embodiment (not illustrated), a housing may refer to a structure forming a portion of the front side 210A, the rear side 210B, and the lateral side 210C of FIG. 1. According to an embodiment, the front side 210A may be formed by a front plate 201 (e.g., a polymer plate or a glass plate including various coating layers), that is at least partially substantially transparent. The rear side 210B may be formed by a substantially opaque rear plate 207. The rear plate 207 may be formed of, for example, coated or colored glass, ceramic, polymer, metal (e.g., aluminum, stainless steel (STS), or magnesium), or a combination of at least two of the materials. The lateral side 210C may be coupled to the front plate 201 and the rear plate 207, and may be formed by a side bezel structure 206 including metal and/or polymer. In an embodiment, the rear plate 207 and the side bezel structure 206 may be integrally formed and may include the same material (e.g., a metal material such as aluminum). The fastening members 250 and 260 may be formed in various materials and shapes. They may be formed integrally and as a plurality of unit links movable with respect to each other by woven fabric, leather, rubber, urethane, metal, ceramic, or a combination of at least two of the materials.

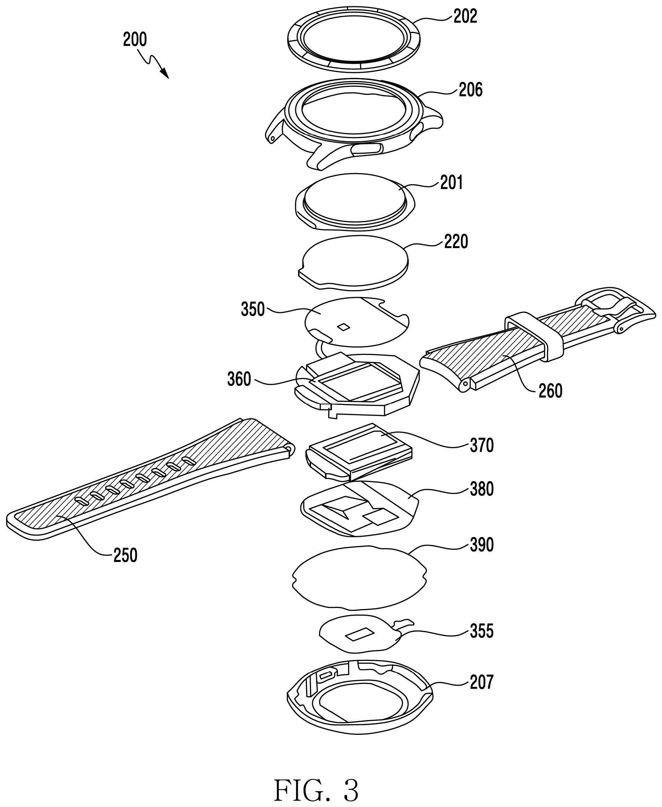

According to an embodiment, the wearable device 200 may include at least one of a display 220 (see FIG. 3), an audio module 205 or 208, a sensor module 211, a key input device 202, 203, or 204, and a connector hole 209. In an embodiment, the wearable device 200 may omit at least one (e.g., the key input device 202, 203, or 204, the connector hole 209, or the sensor module 211) of the components or may additionally include another component.

The display 220 may be visually exposed through, for example, a substantial portion of the front plate 201. A shape of the display 220 may be a shape corresponding to a shape of the front plate 201, and may have various shapes including circular, elliptical, or polygonal. The display 220 may be coupled to or disposed adjacent to touch sensing circuitry, a pressure sensor capable of measuring intensity (pressure) of a touch, and/or a fingerprint sensor.

The audio module 205 or 208 may include a microphone hole 205 and a speaker hole 208. A microphone for obtaining an external sound may be disposed inside the microphone hole 205, and in an embodiment, a plurality of microphones may be disposed to detect a direction of a sound. The speaker hole 208 may be used as an external speaker and a receiver for calls. In an embodiment, the speaker hole 208 and the microphone hole 205 may be implemented as one hole, or a speaker may be included without the speaker hole 208 (e.g., a piezo speaker).

The sensor module 211 may generate an electrical signal or a data value corresponding to an operating state inside the wearable device 200 or an environmental state outside the wearable device 200. The sensor module 211 may include, for example, a biometric sensor module 211 (e.g., an HRM sensor) disposed on the rear side 210B of the housing 210. The wearable device 200 may further include a sensor module not illustrated, for example, at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The key input device 202, 203, and 204 may include a wheel key 202 disposed on the front side 210A of the housing 210 and rotatable in at least one direction, and/or key buttons 203 and 204 disposed on the lateral side 210C of the housing 210. The wheel key may have a shape corresponding to the shape of the front plate 201. In another embodiment, the wearable device 200 may not include some or all of the key input device 202, 203, and 204 described above, and the key input device 202, 203, and 204 not included may be implemented in another form such as a soft key on the display 220.

The connector hole 209 may accommodate a connector (for example, a USB connector) for transmitting and receiving power and/or data with an external electronic device and may include another connector hole (not illustrated) capable of accommodating a connector for transmitting and receiving an audio signal with an external electronic device. The wearable device 200 may further include, for example, a connector cover (not illustrated) covering at least a portion of the connector hole 209 and blocking inflow of foreign substances into the connector hole.

The fastening members 250 and 260 may be detachably fastened to at least a partial area of the housing 210 using locking members 251 and 261. The fastening members 250 and 260 may include one or more of a fixing member 252, a fixing member fastening hole 253, a band guide member 254, and a band fixing ring 255.

The fixing member 252 may be configured to fasten the housing 210 and the fastening members 250 and 260 to a body part (e.g., a wrist or an ankle) of the user. The fixing member fastening hole 253 may fasten the housing 210 and the fastening members 250 and 260 to the body part of the user corresponding to the fixing member 252. The band guide member 254 may be configured to limit a movement range of the fixing member 252 when the fixing member 252 is fastened to the fixing member fastening hole 253, thereby allowing the fastening members 250 and 260 to be closely fastened to the body part of the user. The band fixing ring 255 may limit a movement range of the fastening members 250 and 260 in a state in which the fixing member 252 and the fixing member fastening hole 253 are fastened.

FIG. 3 is an exploded perspective view of the wearable device of FIG. 2A.

Referring to FIG. 3, a wearable device 200 may include a side bezel structure 206, a wheel key 202, a front plate 201, a display 220, a first antenna 350, a second antenna 355, a support member 360 (e.g., a bracket), a battery 370, a printed circuit board 380, a sealing member 390, a rear plate 207, and/or fastening members 250 and 260. At least one of components of the wearable device 200 may be identical or similar to at least one of components of the electronic device 101 of FIG. 1 or the wearable device 200 of FIG. 2A, and redundant descriptions are omitted below. The support member 360 may be disposed inside the wearable device 200 and connected to the side bezel structure 206, or may be integrally formed with the side bezel structure 206. The support member 360 may be formed of, for example, a metal material and/or a non-metal (e.g., polymer) material. The support member 360 may have the display 220 coupled to one surface and the printed circuit board 380 coupled to another surface. A processor, memory, and/or an interface may be mounted on the printed circuit board 380. The processor may include, for example, one or more of a central processing unit, an application processor, a graphic processing unit (GPU), an application processor, a sensor processor, or a communication processor.

The memory may include, for example, a volatile memory or a non-volatile memory. The interface may include, for example, a high definition multimedia interface (HDMI), a universal serial bus (USB) interface, an SD card interface, and/or an audio interface. The interface may, for example, electrically or physically connect the wearable device 200 to an external electronic device, and may include a USB connector, an SD card/MMC connector, or an audio connector.

The battery 370 may be a device for supplying power to at least one component of the wearable device 200 and may include, for example, a non-rechargeable primary battery, a rechargeable secondary battery, or a fuel cell. At least a portion of the battery 370 may be disposed, for example, on substantially the same plane as the printed circuit board 380. The battery 370 may be integrally disposed inside the wearable device 200, or may be detachably disposed with respect to the wearable device 200.

The first antenna 350 may be disposed between the display 220 and the support member 360. The first antenna 350 may include, for example, a near field communication (NFC) antenna, a wireless charging antenna, and/or a magnetic secure transmission (MST) antenna. The first antenna 350 may, for example, perform short-range communication with an external device, wirelessly transmit and receive power required for charging, and transmit a magnetic-based signal including a short-range communication signal or payment data. In another embodiment, an antenna structure may be formed by a portion of the side bezel structure 206 and/or the support member 360 or a combination thereof.

The second antenna 355 may be disposed between the circuit board 380 and the rear plate 207. The second antenna 355 may include, for example, a near field communication (NFC) antenna, a wireless charging antenna, and/or a magnetic secure transmission (MST) antenna. The second antenna 355 may, for example, perform short-range communication with an external device, wirelessly transmit and receive power required for charging, and transmit a magnetic-based signal including a short-range communication signal or payment data. In another embodiment, an antenna structure may be formed by a portion of the side bezel structure 206 and/or the rear plate 207 or a combination thereof.

The sealing member 390 may be positioned between the side bezel structure 206 and the rear plate 207. The sealing member 390 may be configured to block moisture and foreign substances from entering to a space surrounded by the side bezel structure 206 and the rear plate 207 from outside.

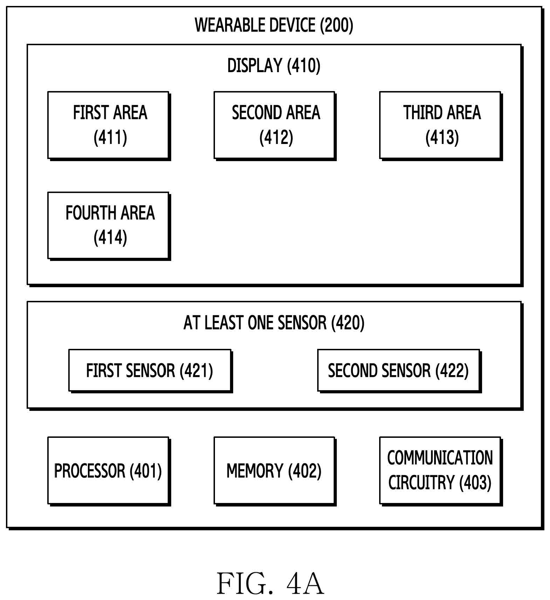

According to an embodiment, although not illustrated, the display 220 may be disposed on the housing 210 and the fastening members 250 and 260. For example, the display 220 may include a portion disposed on the housing 210 and a portion extending from the portion disposed on the housing 210 and respectively forming at least a portion of the fastening members 250 and 260. The portion forming the at least a portion of the fastening members 250 and 260 may be deformable or have elasticity to be worn by a user. The display 220 including a deformable portion may be referred to as a flexible display. A structure of a display 410 including a deformable portion to be worn by the user will be described below with reference to FIGS. 4A to 4E.

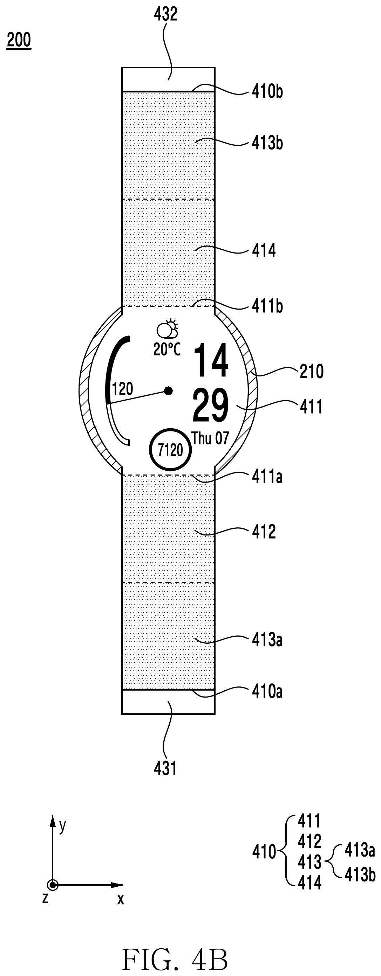

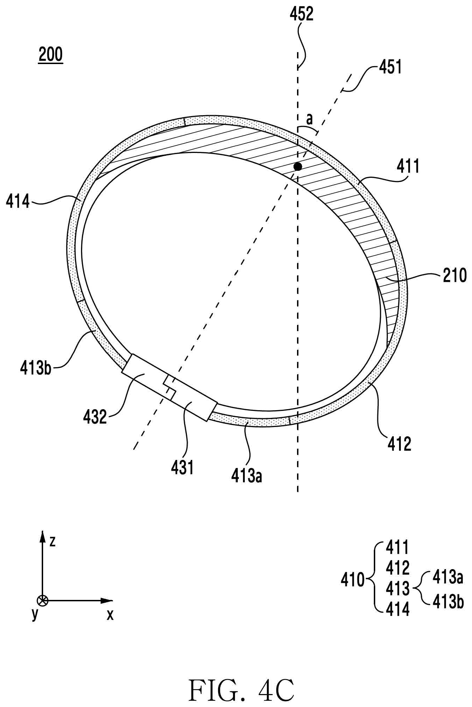

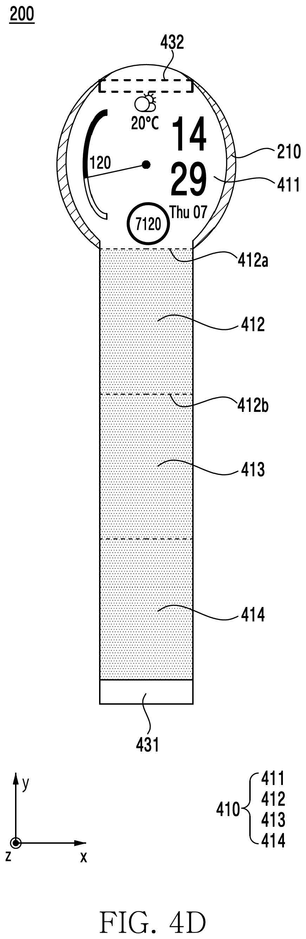

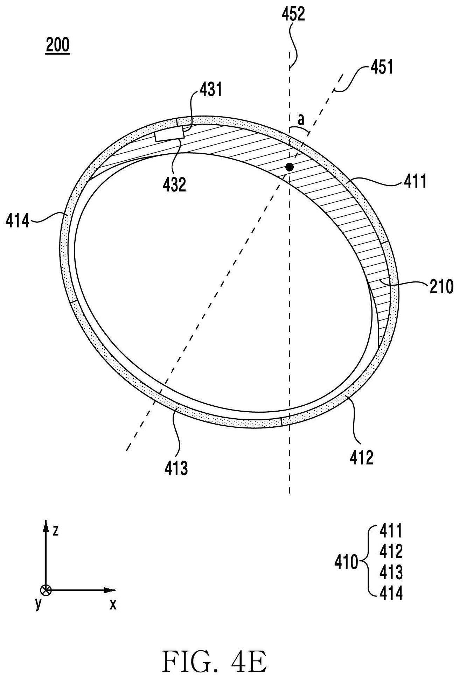

FIG. 4A is a block diagram of an exemplary wearable device. FIG. 4B is a top plan view of an exemplary wearable device. FIG. 4C illustrates the exemplary wearable device of FIG. 4B. FIG. 4D is a top plan view of an exemplary wearable device. FIG. 4E illustrates the exemplary wearable device of FIG. 4D.

Referring to FIGS. 4A, 4B, 4C, 4D, and 4E, a wearable device 200 may include a housing 210, a display 410 (e.g., the display 220 of FIG. 3), at least one sensor 420, a processor 401, and memory 402 storing instructions.

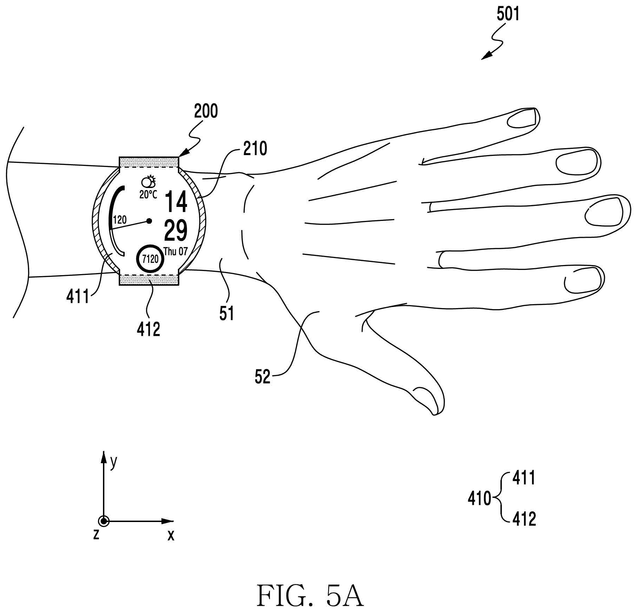

According to an embodiment, the wearable device 200 may be referred to as a watch-type user terminal wearable on a wrist (e.g., a wrist 51 of FIG. 5A) of a user. The wearable device 200 may be referred to as, for example, an electronic device 102 connected to the electronic device 101 of FIG. 1. The wearable device 200 may include communication circuitry 403 for communication with the electronic device 101.

According to an embodiment, the display 410 may include a first area 411 coupled to the housing 210, and a second area 412 extending from the first area 411 and configured to at least partially surround the wrist 51 of the user while the wearable device 200 is worn by the user.

For example, the first area 411 may form at least a portion of an exterior of the housing 210. The first area 411 may form at least a portion of a front side (e.g., the front side 210A of FIG. 2A) of the housing 210. For example, the first area 411 may be an area of the display 410 that is attached to the housing 210. For example, the first area 411 may be fastened to the housing 210. For example, the first area 411 may be an area supported by the housing 210 by being coupled to the housing 210. The first area 411 may be a non-deformable area by being supported by the housing 210.

For example, the second area 412 may be an area connected to the first area 411. For example, the second area 412 may be an area configured to display a screen separate from the first area 411. For example, the second area 412 may be configured to face the wrist 51 of the user when the wearable device 200 is worn by the user. The second area 412 may be configured to fasten the wearable device 200 on the wrist 51 by at least partially surrounding the wrist 51 of the user while the wearable device 200 is worn by the user. For example, the second area 412 may be referred to as the fastening members 250 and 260 of FIGS. 2A and 2B and/or an area attached on the fastening members 250 and 260 in that it is an area to allow the wearable device 200 to be worn by the user, but is not limited thereto. For example, the second area 412 may be deformable by having elasticity. The second area 412 may be configured to detachably fasten the wearable device 200 to the user by being deformable. The second area 412 may be referred to as a strap of the wearable device 200 and/or an area forming at least a portion of the strap, but is not limited thereto.

Although the display 410 has been described as including the first area 411 and the second area 412 configured to display a screen separate from the first area 411, it is not limited thereto. The display 410 may include a plurality of areas configured to display a screen different from the first area 411 coupled to the housing 210, including the second area 412. The display 410 may be referred to as a flexible display in terms of including a plurality of areas configured to display a screen and deformable to be bendable, but is not limited thereto.

For example, referring to FIGS. 4B and 4C, the second area 412 may extend from an end 411a of the first area 411. The display 410 may include a fourth area 414 extending from another end 411b opposite to the end 411a of the first area 411 and configured to surround the wrist 51 of the user together with the second area 412. For example, the display 410 may include a third area 413 including a first portion 413a forming an end 410a of the display 410 and extending from the second area 412, and a second portion 413b forming another end 410b opposite to the end 410a of the display 410 and extending from the fourth area 414. For example, the processor 401 may control the display 410 such that different screens are displayed in the areas 411, 412, 413, and 414 of the display 410, respectively. For example, the first portion 413a and the second portion 413b of the third area 413 may face each other while the wearable device 200 is fastened to the user. The third area 413 may be an area overlapping the first area 411 when the first area 411 is viewed from above (e.g., when viewed from a +z direction) while the wearable device 200 is fastened to the user. The processor 401 may, for example, control the display 410 such that the first portion 413a and the second portion 413b of the third area 413 display visual information together.

For example, referring to FIGS. 4D and 4E, the display 410 may include a third area 413 extending from another end 412b of the second area 412 opposite to an end 412a of the second area 412, the end 412a being connected to the first area 411, and a fourth area 414 extending from the third area 413 and configured to be coupled to the housing 210. For example, the processor 401 may control the display 410 such that different screens are displayed in the areas 411, 412, 413, and 414 of the display 410, respectively. The third area 413 may be an area overlapping the first area 411 when the first area 411 is viewed from above (e.g., when viewed from the +z direction) while the wearable device 200 is fastened to the user. However, it is not limited thereto, and the display 410 may include a plurality of areas configured to display different screens, respectively.

According to an embodiment, the wearable device 200 may include a first fastening portion 431 and a second fastening portion 432. The second fastening portion 432 may be configured to be coupled to the first fastening portion 431. For example, referring to FIGS. 4B and 4C, the first fastening portion 431 may be coupled to the end 410a of the display 410. The second fastening portion 432 may be coupled to the another end 410b opposite to the end 410a of the display 410 and may be configured to be detachably coupled to the first fastening portion 431. For example, referring to FIGS. 4C and 4D, the first fastening portion 431 may be coupled to the third area 413. The second fastening portion 432 may be configured to be detachably coupled to the first fastening portion 431 by being formed in the housing 210. For example, the first fastening portion 431 may be configured such that the wearable device 200 is worn on the wrist 51 of the user by being coupled to the second fastening portion 432. At least a portion of the display 410 may surround the wrist 51 by fastening of the first fastening portion 431 and the second fastening portion 432.

According to an embodiment, at least one sensor 420 may detect a motion of the user. For example, the at least one sensor 420 may include at least one of a motion sensor, a geomagnetic sensor, an acceleration sensor, and a gyro sensor for detecting a motion of the user, but is not limited thereto. For example, the at least one sensor 420 may include a first sensor 421 for detecting a first motion of the user, and a second sensor 422 for detecting a second motion of the user. The first sensor 421 may be configured to, for example, detect a hand motion and/or a gesture of a hand of the user. The second sensor 422 may be configured to, for example, detect rotation of the wrist 51 of the user on which the wearable device 200 is worn. However, it is not limited thereto, and the at least one sensor 420 may include a plurality of sensors configured to detect a motion of the user.

According to an embodiment, the processor 401 may be configured to control the display 410 based on a motion of the user detected via the at least one sensor 420. For example, the processor 401 may be configured to determine an area among the areas 411, 412, 413, and 414 of the display 410 to display a screen including visual information based on the motion of the user. For example, based on identifying that one motion among various motions of the user corresponds to one gesture included in a preset gesture group, the processor 401 may control the display 410 to display a screen including visual information via one area among the areas 411, 412, 413, and 414 corresponding to the one gesture. The processor 401 may improve convenience for the user in using the wearable device 200 and provide various user experiences to the user by being configured to determine one screen to display a screen including visual information among the areas 411, 412, 413, and 414 based on the motion of the user. Operations of the wearable device 200 and/or the processor 401 for determining an area of the display 410 for displaying visual information based on the motion of the user will be described below with reference to FIG. 5A and subsequent figures.

According to an embodiment, the processor 401 may be configured to control the display 410 to display visual information in the second area 412 based on an angle a between a reference axis 452 and an orientation axis 451 of the wearable device 200 within a first reference range, detected via the second sensor 422, while the first motion of the user is detected via the first sensor 421. The processor 401 may be configured to control the display 410 to display visual information in the third area 413 based on the angle a within a second reference range greater than the first reference range, detected via the second sensor 422, while the first motion is detected via the first sensor 421.

The orientation axis 451 may be an axis representing an orientation of the wearable device 200. For example, the orientation axis 451 may rotate along the wearable device 200 by rotation of the wearable device 200. For example, the orientation axis 451 may extend from a point where the orientation axis 451 intersects with the reference axis 452 toward an orientation of the orientation axis 451. For example, the orientation axis 451 may have an orientation perpendicular to the first area 411. However, it is not limited thereto. The orientation axis 451 may be an axis providing information on tilt and/or rotation of the wearable device 200 by representing the orientation of the wearable device 200 according to rotation of the wearable device 200 through an angle a between the orientation axis 451 and the reference axis 452 fixed with respect to the orientation axis 451.

The reference axis 452 may be an axis independently fixed with respect to rotation of the wearable device 200 and movement of the wearable device 200. For example, the reference axis 452 may be substantially parallel to a direction of gravity applied to the wearable device 200. For example, the reference axis 452 may be an axis parallel to a z-axis. However, it is not limited thereto. The reference axis 452 may be an axis providing information on tilt and/or rotation of the wearable device 200 through an angle a between the reference axis 452 and the orientation axis 451 rotatable according to rotation of the wearable device 200 based on the reference axis 452.

For example, the processor 401 may be configured to identify the angle a between the orientation axis 451 and the reference axis 452 via the second sensor 422 while identifying the first motion of the user (e.g., a grip of the hand of the user) via the first sensor 421. For example, the processor 401 may be configured to identify the second motion of the user (e.g., rotation of the wrist 51 of the user at an angle within the first reference range) based on the angle a within the first reference range (e.g., a range of approximately 0 degrees to 90 degrees), detected via the second sensor 422. The processor 401 may control the display 410 to display a screen including visual information in the second area 412 based on identifying the second motion. For example, the processor 401 may be configured to identify a third motion of the user (e.g., rotation of the wrist 51 of the user at an angle within the second reference range) based on the angle a within the second reference range (e.g., a range of 90 degrees to 180 degrees) greater than the first reference range, detected via the second sensor 422. The processor 401 may control the display 410 to display a screen including visual information in the third area 413 based on identifying the third motion. Operations of the wearable device 200 and/or the processor 401 for changing a display area of the display 410 according to a motion of the user will be described with reference to FIGS. 5A to 5D.

According to the embodiment described above, the display 410 of the wearable device 200 may provide various user experiences to the user by including areas 411, 412, 413, and 414 each configured to display a screen. The processor 401 of the wearable device 200 may improve convenience for the user in using the wearable device 200 by being configured to determine an area to display a screen among the areas 411, 412, 413, and 414 based on a motion of the user detected via the at least one sensor 420.

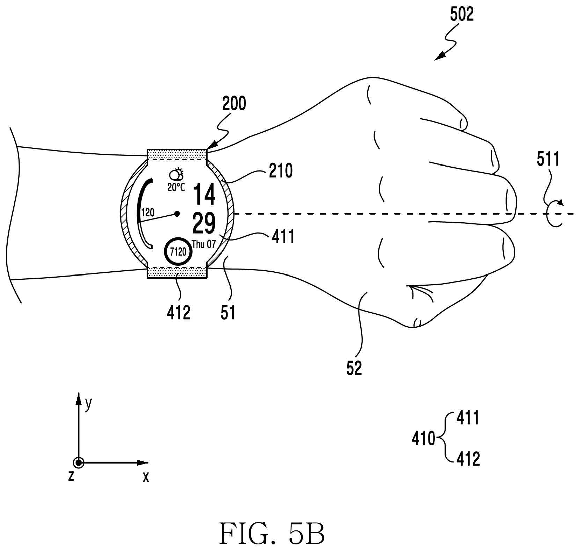

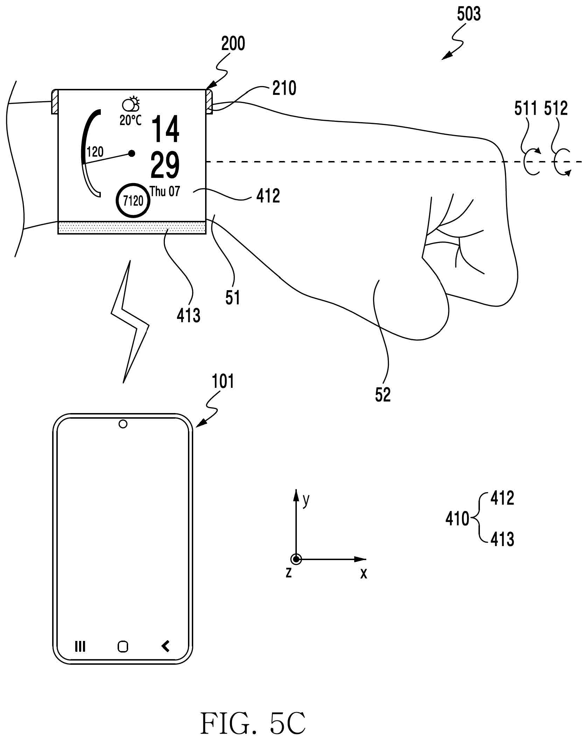

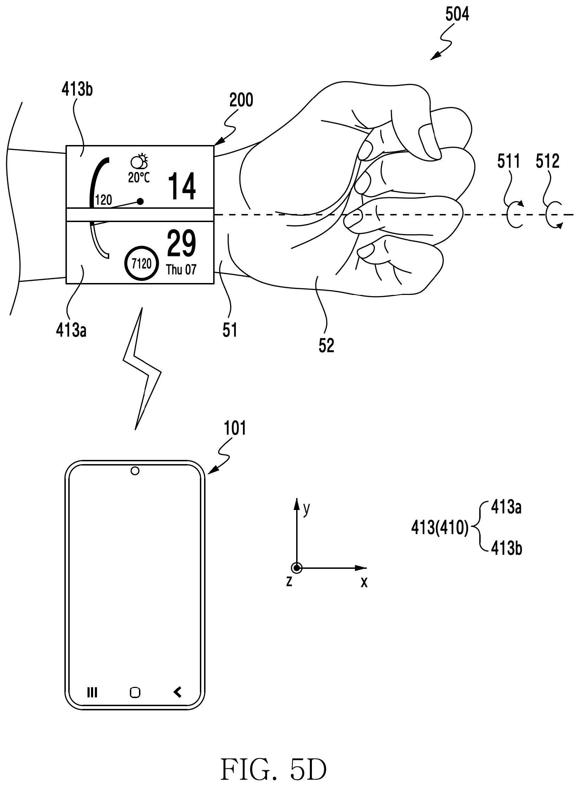

FIGS. 5A, 5B, 5C, and 5D illustrate an operation of an exemplary wearable device.

Referring to FIGS. 5A, 5B, 5C, and 5D, a wearable device 200 may include a housing 210, and a display 410 including a first area 411 coupled to the housing 210, and a second area 412 extending from the first area 411 and configured to at least partially surround a wrist 51 of a user while the wearable device 200 is worn by the user. The wearable device 200 may include at least one sensor (e.g., the at least one sensor 420 of FIG. 4A) to detect a motion of the user, memory (e.g., the memory 402 of FIG. 4A) storing instructions, and a processor (e.g., the processor 401 of FIG. 4A). Operations of FIGS. 5A to 5D may be performed by the wearable device 200 of FIG. 2A and/or the processor 401. According to an embodiment, the display 410 may include a third area 413, at least a portion of which extends from the second area 412.

Hereinafter, redundant descriptions of components having the same reference numerals as those described above in FIGS. 4A to 4E will be omitted.

According to an embodiment, the processor 401 may be configured to execute a function for switching a screen of the display 410 based on identifying a first motion of the user detected via the at least one sensor 420 while visual information is displayed in the first area 411 of the display 410. The processor 401 may be configured to display visual information in the second area 412 based on identifying a second motion of the user after the first motion detected via the at least one sensor 420.

For example, when sequentially referring to FIGS. 5A and 5B, while changing from a state 501 to a state 502, the processor 401 may be configured to identify the first motion of the user via the at least one sensor 420. The processor 401 may be configured to execute a function for displaying a visual object in an area different from the first area 411 based on the first motion of the user identified while the visual object is displayed via the first area 411. For example, the processor 401 may be configured to execute a function for changing an area in which the visual object is displayed from the first area 411 based on the first motion corresponding to an operation of a hand 52 of the user or a gesture of the hand 52 detected via the at least one sensor 420.

For example, when sequentially referring to FIGS. 5B and 5C, while changing from the state 502 to a state 503, the processor 401 may be configured to identify a second motion of the user after the first motion via the at least one sensor 420. The processor 401 may control the display 410 to change an area in which a visual object is displayed from the first area 411 to the second area 412 based on the second motion after the first motion detected via the at least one sensor 420 while identifying the first motion of the user (e.g., a grip of the hand 51 of the user) via the at least one sensor 420. For example, the processor 401 may be configured to identify the second motion of the user via the at least one sensor 420 while the function for switching a screen of the display 410 executed based on the first motion of the user is executed. The processor 401 may control the display 410 to switch a screen in which a visual object is displayed from the first area 411 to the second area 412 based on identifying the second motion. The wearable device 200 may improve convenience for the user in using the wearable device 200 by controlling the display 410 such that a screen is displayed in an area of the display 410 corresponding to a gaze direction (e.g., a -z direction) of the user by a combination of the first motion and the second motion of the user.

According to an embodiment, the processor 401 may be configured to identify the first motion corresponding to a grab of the user via the at least one sensor 420. The processor 401 may be configured to identify the second motion corresponding to rotation of the wrist 51 of the user immediately after the first motion via the at least one sensor 420 while maintenance of the first motion is identified.

For example, when sequentially referring to FIGS. 5A and 5B, while changing from the state 501 to the state 502, the processor 401 may be configured to identify various motions of the hand 52 based on movement of the hand 52 of the user detected via a first sensor (e.g., the first sensor 421 of FIG. 4A). The processor 401 may be configured to identify whether the motion of the hand 52 corresponds to a first gesture corresponding to a grip of the hand 52 included in a preset gesture group among the various motions of the hand 52. The processor 401 may be configured to execute the function for switching a screen of the display 410 based on identifying the first motion of the user corresponding to the first gesture.

For example, when sequentially referring to FIGS. 5B and 5C, while changing from the state 502 to the state 503, the processor 401 may be configured to identify the second motion corresponding to rotation of the wrist 51 of the user based on an angle (e.g., the angle a of FIG. 4C) between an orientation axis (e.g., the orientation axis 451 of FIG. 4C) and a reference axis (e.g., the reference axis 452 of FIG. 4C) within a first reference range (e.g., a range of 0 degrees to 90 degrees), detected via a second sensor (e.g., the second sensor 422 of FIG. 4A). The processor 401 may control the display 410 to switch a screen in which a visual object is displayed from the first area 411 to the second area 412 based on the angle a within the first reference range. For example, the processor 401 may control the display 410 to cease to display a screen in the first area 411 of the display 410 and to display a screen in the second area 412 of the display 410 based on identifying the second motion after the first motion via the second sensor 422. For example, while identifying that the first motion corresponding to a grip of the hand 52 of the user detected via the first sensor 421 corresponds to the first gesture included in the preset gesture group, the processor 401 may be configured to identify whether a motion of the user after the first motion corresponds to a second gesture corresponding to rotation of the wrist 51 of the user included in the gesture group. The processor 401 may control the display 410 to switch a screen in which a visual object is displayed from the first area 411 to the second area 412 based on identifying the second motion corresponding to the second gesture after the first motion.

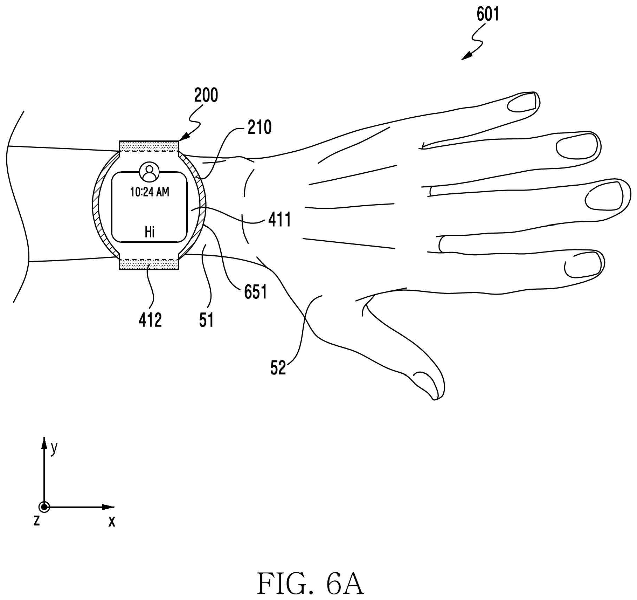

For example, the processor 401 may control the display 410 to display at least a portion of a visual object, which was displayed via the first area 411, via the second area 412 based on identifying the second motion after the first motion. For example, a screen displayed in the first area 411 before the second motion may be substantially identical to a screen displayed in the second area 412 after the second motion, but is not limited thereto. An operation of the processor 401 displaying another screen in the second area 412 after the second motion is described through FIGS. 6A to 7B.

According to an embodiment, the processor 401 may be configured to display visual information in the third area 413 based on identifying a third motion of the user after the second motion detected via the at least one sensor 420.

For example, when sequentially referring to FIGS. 5B and 5C, while the first motion is detected via the first sensor 421, the processor 401 may be configured to identify the second motion of the user after the first motion based on the angle a between the reference axis 452 and the orientation axis 451 of the wearable device 200 within the first reference range (e.g., a range of 0 degrees to 90 degrees), detected via the second sensor 422. The processor 401 may control the display 410 to display visual information in the second area 412 based on the second motion identified while changing from the state 502 to the state 503. For example, the processor 401 may control the display 410 to switch a screen in which a visual object is displayed from the first area 411 to the second area 412 based on the second motion identified while changing from the state 502 to the state 503. For example, when sequentially referring to FIGS. 5C and 5D, while the first motion is detected via the first sensor 421, the processor 401 may be configured to identify the third motion after the second motion based on the angle a within a second reference range (e.g., a range of 90 degrees to 180 degrees) greater than the first reference range, detected via the second sensor 422. The processor 401 may control the display 410 to display visual information in the third area 413 based on the third motion identified while changing from the state 503 to a state 504. For example, the processor 401 may control the display 410 to switch a screen in which a visual object is displayed from the second area 412 to the third area 413 based on the third motion identified while changing from the state 503 to the state 504.

According to an embodiment, the processor 401 may be configured to display visual information in the second area 412 based on identifying the second motion corresponding to rotation of the wrist 51 of the user in a first rotation direction 511 after the first motion via the at least one sensor 420. The processor 401 may be configured to display visual information in the third area 413 based on identifying the third motion corresponding to rotation of the wrist 51 in the first rotation direction 511 after the second motion via the at least one sensor 420. For example, when sequentially referring to FIGS. 5B, 5C, and 5D, while the first motion of the user (e.g., a grip of the hand 52 of the user) is identified via the first sensor 421, the processor 401 may be configured to identify motions corresponding to rotation of the wrist 51 of the user in the first rotation direction 511 via the second sensor 422.

For example, when sequentially referring to FIGS. 5B and 5C, the processor 401 may be configured to identify the second motion corresponding to rotation of the wrist 51 in the first rotation direction 511 after the first motion based on the angle a between the orientation axis 451 and the reference axis 452 within the first reference range (e.g., a range of 0 degrees to 90 degrees), identified via the second sensor 422. The processor 401 may control the display 410 such that visual information is displayed in the second area 412 based on identifying the second motion. For example, when sequentially referring to FIGS. 5C and 5D, the processor 401 may be configured to identify the third motion corresponding to rotation of the wrist 51 in the first rotation direction 511 after the second motion based on the angle a between the orientation axis 451 and the reference axis 452 within the second reference range (e.g., a range of 90 degrees to 180 degrees), identified via the second sensor 422. The processor 401 may control the display 410 such that visual information is displayed in the third area 413 based on identifying the third motion. The processor 401 may improve convenience for the user in using the wearable device 200 by controlling the display 410 such that a screen is displayed in an area of the display 410 positioned in the gaze direction (e.g., the -z direction) of the user according to a motion of the user and/or a combination of motions.

According to an embodiment, the processor 401 may be configured to display visual information in the first area 411 based on identifying a fourth motion corresponding to rotation of the wrist 51 of the user in a second rotation direction 512 opposite to the first rotation direction 511 after the second motion via the at least one sensor 420. For example, when sequentially referring to FIGS. 5C and 5B, while changing from the state 503 to the state 502, the processor 401 may be configured to identify the fourth motion corresponding to rotation of the wrist 51 of the user in the second rotation direction 512 opposite to the first rotation direction 511 via the at least one sensor 420. The processor 401 may control the display 410 to switch a screen in which a visual object is displayed from the second area 412 to the first area 411 based on identifying the fourth motion after the second motion corresponding to rotation of the wrist 51 in the first rotation direction 511. However, it is not limited thereto.

For example, when sequentially referring to FIGS. 5D and 5C, while changing from the state 504 to the state 503, the processor 401 may be configured to identify a fifth motion corresponding to rotation of the wrist 51 of the user in the second rotation direction 512 opposite to the first rotation direction 511 via the at least one sensor 420. The processor 401 may control the display 410 to switch a screen in which a visual object is displayed from the third area 413 to the second area 412 based on identifying the fifth motion after the third motion corresponding to rotation of the wrist 51 in the first rotation direction 511.

According to an embodiment, the processor 401 may be configured to identify whether the second motion after the first motion is detected based on identifying the first motion of the user detected via the at least one sensor 420. The processor 401 may control the display 410 to cease to display a screen in the first area 411 based on identifying that the second motion is not detected during a preset period. For example, when sequentially referring to FIGS. 5B and 5C, while the first motion corresponding to a grab of the hand 52 of the user is identified, the processor 401 may be configured to identify whether a motion of the user after the first motion is detected. The processor 401 may control the display 410 to cease to display a screen in the first area 411 based on identifying that the second motion corresponding to rotation of the wrist 51 of the user in the first rotation direction 511 is not detected during the preset period. The wearable device 200 may reduce unnecessary power consumption by being configured to cease to display visual information via the first area 411 when the second motion after the first motion is not identified during the preset period.

According to an embodiment, while identifying the second motion of the user after the first motion, the processor 401 may control the display 410 to cease to display visual information in the second area 412 based on identifying that the first motion is released via the at least one sensor 420. For example, when sequentially referring to FIGS. 5B and 5C, while changing from the state 502 to the state 503, the processor 401 may be configured to identify that the first motion corresponding to a grab of the hand 52 of the user is maintained via the at least one sensor 420. The processor 401 may be configured to identify the second motion corresponding to rotation of the wrist 51 of the user in the first rotation direction 511 while the first motion is maintained. The processor 401 may be configured to display a screen including visual information in the second area 412 based on the second motion identified while the first motion is maintained. The processor 401 may control the display 410 to cease to display the screen including visual information in the second area 412 based on identifying that the first motion is released while the second motion is performed. For example, the processor 401 may be configured to identify a sixth motion (e.g., opening of the hand 52 of the user) for releasing the first motion corresponding to a grip of the hand 52 of the user while the second motion is performed. Based on identifying the sixth motion, the processor 401 may control the display 410 to cease to display visual information in the second area 412 and to display the visual information in the first area 411.

According to an embodiment, the processor 401 may be configured to perform an event for executing a function corresponding to a combination of the first motion and the second motion of an electronic device 101 connected to the wearable device 200 via communication circuitry (e.g., the communication circuitry 403 of FIG. 4A) based on identifying the second motion of the user after the first motion detected via the at least one sensor 420.

For example, when sequentially referring to FIGS. 5B and 5C, the wearable device 200 may be communicatively connected to the electronic device 101 via the communication circuitry 403. The processor 401 of the wearable device 200 may perform an event for executing a function corresponding to a combination of the first motion and the second motion in the electronic device 101 based on identifying the combination of the first motion corresponding to a grip of the hand 52 of the user and the second motion corresponding to rotation of the wrist 51 of the user in the first rotation direction 511 after the first motion. For example, the processor 401 may be configured to cause the electronic device 101 to execute an application of the electronic device 101 corresponding to the combination of the first motion and the second motion based on identifying the first motion and the second motion. For example, when sequentially referring to FIGS. 5C and 5D, the processor 401 of the wearable device 200 may perform an event for performing a function corresponding to a combination of the second motion and the third motion in the electronic device 101 based on identifying the combination of the second motion of the user and the third motion corresponding to rotation of the wrist 51 of the user in the first rotation direction 511 after the second motion of the user. For example, the processor 401 may perform an event for executing a function corresponding to the combination of the second motion and the third motion in the electronic device 101 based on identifying the second motion and the third motion. For example, the processor 401 may be configured to cause the electronic device 101 to execute a function for authentication of an application of the electronic device 101 based on identifying the second motion and the third motion. However, the embodiments described above are exemplary and are not limited thereto. The wearable device 200 may be configured to cause execution of functions of the electronic device 101 respectively corresponding to combinations of motions based on identifying combinations of various motions.

In FIGS. 5A to 5D, the first motion is described as corresponding to a grip of the hand 52 of the user and the second motion and/or the third motion is described as corresponding to rotation of the wrist 51 of the user, but the embodiments described above are exemplary and are not limited thereto. The wearable device 200 may be configured such that the user is provided with visual information via an area of the display 410 positioned in the gaze direction (e.g., the -z direction) of the user by controlling the display 410 to display visual information via respective areas of the display 410 corresponding to a plurality of motions of the user and/or combinations of the plurality of motions.

According to the embodiment described above, the wearable device 200 may improve convenience for the user in using the wearable device 200 and provide various user experiences to the user by displaying visual information via an area of the display 410 corresponding to the gaze direction (e.g., the -z direction) of the user according to a motion of the user and/or a combination of motions.

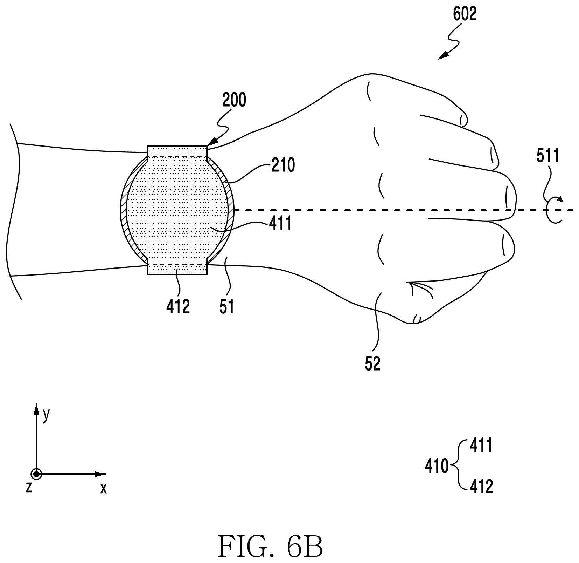

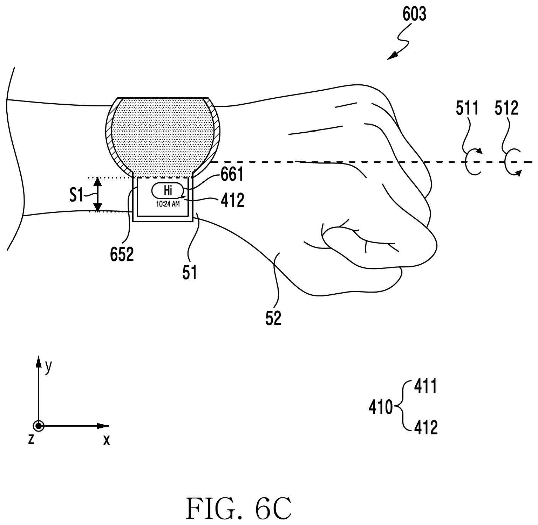

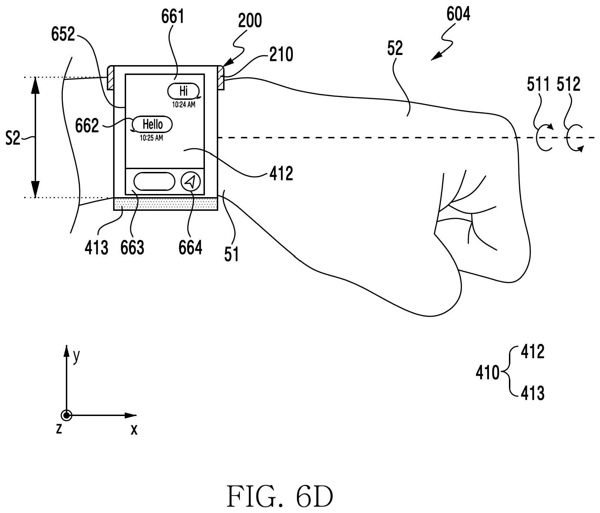

FIGS. 6A, 6B, 6C, and 6D illustrate an operation of an exemplary wearable device.

Referring to FIGS. 6A, 6B, 6C, and 6D, a wearable device 200 may include a housing 210, and a display 410 including a first area 411 coupled to the housing 210, and a second area 412 extending from the first area 411 and configured to at least partially surround a wrist 51 of a user while the wearable device 200 is worn by the user. The wearable device 200 may include at least one sensor (e.g., the at least one sensor 420 of FIG. 4A) to detect a motion of the user, memory (e.g., the memory 402 of FIG. 4A) storing instructions, and a processor (e.g., the processor 401 of FIG. 4A). The processor 401 may be configured to execute a function for switching a screen of the display 410 based on identifying a first motion of the user detected via the at least one sensor 420 while visual information is displayed in the first area 411. The processor 401 may be configured to display visual information in the second area 412 based on identifying a second motion of the user after the first motion detected via the at least one sensor 420. Operations of FIGS. 6A to 6D may be performed by the wearable device 200 of FIG. 2A and/or the processor 401.

According to an embodiment, the processor 401 may control the display 410 to cease to display visual information in the first area 411 based on identifying the first motion of the user detected via the at least one sensor 420. The processor 401 may be configured to identify an angle (e.g., the angle a of FIG. 4B) between a reference axis (e.g., the reference axis 452 of FIG. 4B) and an orientation axis (e.g., the orientation axis 451 of FIG. 4B) of the wearable device 200 based on the second motion corresponding to rotation of the wrist 51 of the user after the first motion detected via the at least one sensor 420 while maintenance of the first motion is identified. The processor 401 may control the display 410 to change a size of a screen of the second area 412 displaying visual information according to a magnitude of the angle a based on the angle a.

For example, referring to FIG. 6A, the processor 401 may control the display 410 to, based on a text message received by the wearable device 200, display a screen 651 including the text message via the first area 411. For example, when sequentially referring to FIGS. 6A and 6B, while changing from a state 601 to a state 602, the processor 401 may control the display 410 to cease to display a screen in the first area 411 based on identifying the first motion corresponding to a grab of a hand 52 of the user detected via the at least one sensor 420.

Although it has been described that the processor 401 controls the display 410 to cease to display a screen in the first area 411 while changing from the state 601 to the state 602 based on the first motion, it is not limited thereto. For example, the processor 401 may be configured to execute the function for switching a screen of the display 410 based on the first motion detected via the at least one sensor 420. The processor 401 may be configured to, for example, maintain displaying a screen in the first area 411 while the first motion is identified. For example, the processor 401 may be configured to adjust brightness of the screen of the first area 411 to be less than or equal to a preset brightness based on identifying the first motion. However, the embodiments described above are exemplary and are not limited thereto.

For example, when sequentially referring to FIGS. 6B, 6C, and 6D, while changing from a state 603 to a state 604, the processor 401 may control the display 410 to display a screen 652 related to a text message in the second area 412 according to a rotation angle of the wrist 51 based on identifying the second motion corresponding to rotation of the wrist 51 of the user detected via the at least one sensor 420 while the first motion of the user is performed. For example, the processor 401 may, based on a magnitude of the angle a between the orientation axis 451 and the reference axis 452 detected via the at least one sensor 420, control the display 410 such that a size of the screen 652 through which visual information is provided via the second area 412 corresponds to the magnitude of the angle a.

For example, when sequentially referring to FIGS. 6B and 6C, the processor 401 may control the display 410 to display the screen 652 of a first size S1 via the second area 412 based on identifying the angle a between the orientation axis 451 and the reference axis 452 within a first range (e.g., a range of 0 degrees to 45 degrees), detected via the at least one sensor 420. The screen 652 of the first size S1 may include a text message 661 that was displayed via the first area 411 of FIG. 6A. For example, when sequentially referring to FIGS. 6C and 6D, the processor 401 may control the display 410 to display the screen 652 of a second size S2 larger than the first size S1 via the second area 412 based on identifying the angle a between the orientation axis 451 and the reference axis 452 within a second range (e.g., a range of 45 degrees to 90 degrees), detected via the at least one sensor 420. The screen 652 of the second size S2 may include text messages 661 and 662 including the text message 661 that was displayed via the first area 411 of FIG. 6A. The screen 652 of the second size S2 may include a visual object 663 for text input, and a visual object 664 for transmission of a text message. However, the embodiment described above is exemplary and is not limited thereto.

For example, when sequentially referring to FIG. 6B, FIG. 6C, and FIG. 6D, according to a rotation angle of the wrist 51 of the user in a first rotation direction 511, the wearable device 200 may be configured such that the size of the screen provided via the second area 412 increases. For example, when sequentially referring to FIGS. 6D, 6C, and 6B, according to a rotation angle of the wrist 51 of the user in a second rotation direction 512 opposite to the first rotation direction 511, the wearable device 200 may be configured such that the size of the screen provided via the second area 412 decreases. The processor 401 of the wearable device 200 may control the display 410 to adjust the size of the screen provided via the second area 412 by being configured to identify a motion corresponding to rotation of the wrist 51 in the first rotation direction 511 and the second rotation direction 512 opposite to the first rotation direction 511.

According to the embodiment described above, the processor 401 of the wearable device 200 may improve convenience for the user in using the wearable device 200 and provide various user experiences to the user by controlling the display 410 such that a size of a screen for displaying visual information is changed according to a motion of the user.

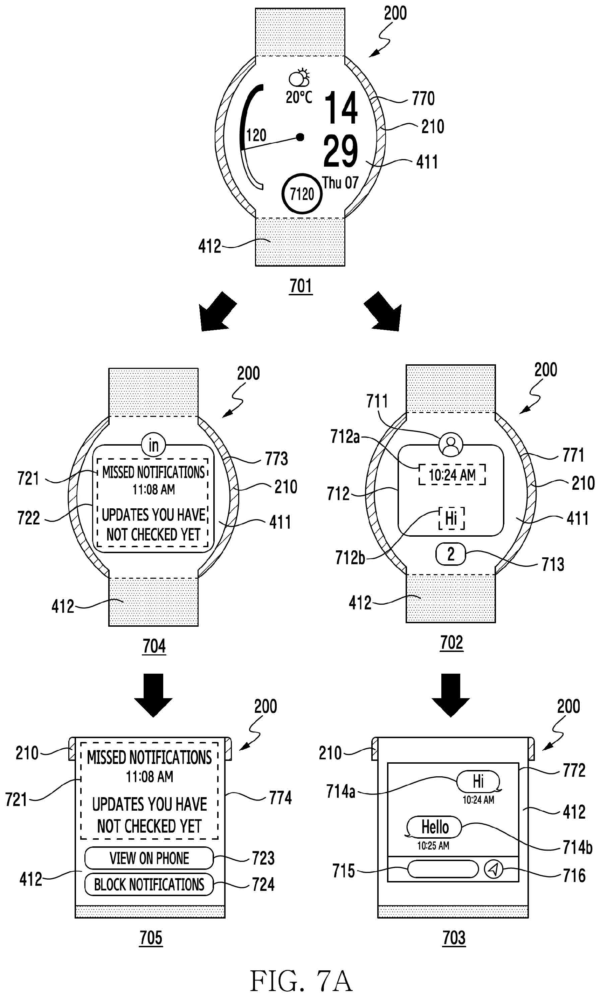

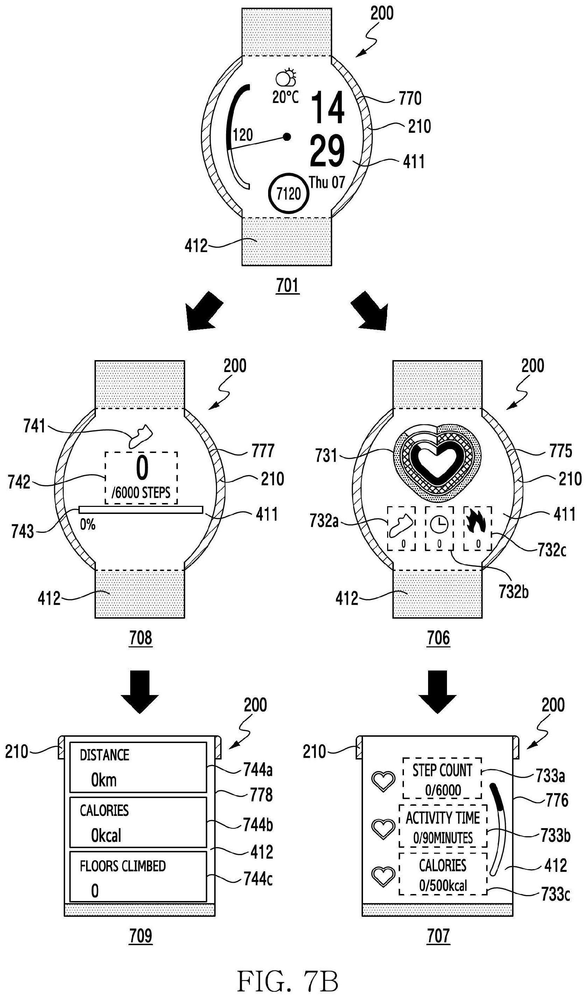

FIGS. 7A and 7B illustrate an operation of an exemplary wearable device.

Referring to FIGS. 7A and 7B, a wearable device 200 may include a housing 210, and a display 410 including a first area 411 coupled to the housing 210, and a second area 412 extending from the first area 411 and configured to at least partially surround a wrist (e.g., the wrist 51 of FIG. 5A) of a user while the wearable device 200 is worn by the user. The wearable device 200 may include at least one sensor (e.g., the at least one sensor 420 of FIG. 4A) to detect a motion of the user, memory (e.g., the memory 402 of FIG. 4A) storing instructions, and a processor (e.g., the processor 401 of FIG. 4A). The processor 401 may be configured to execute a function for switching a screen of the display 410 based on identifying a first motion of the user detected via the at least one sensor 420 while visual information is displayed in the first area 411. The processor 401 may be configured to display visual information in the second area 412 based on identifying a second motion of the user after the first motion detected via the at least one sensor 420. Operations of FIGS. 7A and 7B may be performed by the wearable device 200 of FIG. 2A and/or the processor 401.

According to an embodiment, the processor 401 may control the display 410 to display, via the first area 411, a first screen related to an application being executed in the wearable device 200 based on identifying the first motion of the user detected via the at least one sensor 420. The processor 401 may control the display 410 to display, in the second area 412, a second screen related to the application and different from the first screen, based on identifying the second motion of the user after the first motion detected via the at least one sensor 420. The second screen displayed via the second area 412 based on the second motion may further include additional information related to the application than the first screen displayed via the first area 411 based on the first motion.

For example, referring to FIG. 7A, while changing from a state 701 to a state 702, the processor 401 may, based on the first motion of the user, control the display 410 to display, via the first area 411, a screen 771 related to a message application being executed in the wearable device 200. The screen 771 may include, for example, an area 712 displaying text 712b corresponding to a text message 714a received by the wearable device 200 from an external electronic device (e.g., the electronic device 101 of FIG. 1) and a visual object 712a representing a time at which the text 712b was received. The screen 771 may include a visual object 711 representing a counterpart who transmitted the text message 714a, and a visual object 713 representing the number of transmitted and received text messages with the counterpart. For example, while changing from the state 702 to a state 703, the processor 401 may, based on the second motion after the first motion of the user, control the display 410 to display, via the second area 412, a screen 772 related to the message application being executed in the wearable device 200. The screen 772 may provide, for example, a conversation list including the text message 714a received by the wearable device 200 from the external electronic device (e.g., the electronic device 101 of FIG. 1), and a text message 714b transmitted from the wearable device 200 to the external electronic device 101. The screen 772 may include an area 715 for inputting text, and a visual object 716 for transmitting the text input in the area 715 to the external electronic device 101.

For example, while changing from the state 701 to a state 704, the processor 401 may, based on the first motion of the user, control the display 410 to display, via the first area 411, a screen 773 related to an application for updating the wearable device 200 being executed in the wearable device 200. The screen 773 may include, for example, an area 722 including information 721 related to an update of the wearable device 200. For example, while changing from the state 704 to a state 705, the processor 401 may, based on the second motion after the first motion of the user, control the display 410 to display, via the second area 412, a screen 774 related to the application for updating the wearable device 200 being executed in the wearable device 200. The screen 774 may display, for example, a visual object 723 for displaying update contents of the wearable device 200 in the external electronic device (e.g., the electronic device 101 of FIG. 1) connected to the wearable device 200 including the information 721 related to the update of the wearable device 200, and a visual object 724 for ceasing notification of the update contents.

Referring to FIG. 7B, the wearable device 200 may include a biometric sensor (not illustrated) for measuring biometric information of the user wearing the wearable device 200. The processor 401 may control the display 410 to display, via the display 410, the biometric information measured via the biometric sensor.

For example, while changing from the state 701 to a state 706, the processor 401 may, based on the first motion of the user, control the display 410 to display, via the first area 411, a screen 775 related to a health application being executed in the wearable device 200. The screen 775 may display, for example, a graph 731 representing activity history of the user, an area 732a including a visual object representing a step count of the user, an area 732b including a visual object representing an activity time of the user, and an area 732c including a visual object representing calories consumed by the user. For example, while changing from the state 704 to the state 705, the processor 401 may, based on the second motion after the first motion of the user, control the display 410 to display, via the second area 412, a screen 776 related to the health application being executed in the wearable device 200. The screen 775 may display, for example, an area 733a including data related to a step count of the user, an area 733b including data related to an activity time of the user, and an area 733c including data related to calories consumed by the user.

For example, while changing from the state 701 to a state 708, the processor 401 may, based on the first motion of the user, control the display 410 to display, via the first area 411, a screen 777 related to an exercising application being executed in the wearable device 200. The screen 777 may display, for example, a visual object 741 representing the exercising application, an area 742 including data related to a step count of the user, and a graph 743 related to the step count. For example, while changing from the state 708 to a state 709, the processor 401 may, based on the second motion after the first motion of the user, control the display 410 to display, via the second area 412, a screen 778 related to the exercising application being executed in the wearable device 200. The screen 778 may display, for example, an area 744a including data related to a moving distance of the user, an area 744b including data related to calories consumed by the user, and an area 744c including data related to the number of stairs climbed by the user.

The embodiments described through FIG. 7A and FIG. 7B are exemplary and are not limited thereto. The processor 401 may, based on the first motion of the user, control the display 410 to provide, via the first area 411, a simplified screen related to an application being executed in the wearable device. The processor 401 may, based on the second motion after the first motion of the user, control the display 410 to provide, via the second area 412, a detailed screen related to the application being executed in the wearable device.

According to the embodiment described above, the processor 401 of the wearable device 200 may provide various user experiences to the user by controlling the display 410 to display a plurality of screens including information related to an application in a plurality of areas of the display 410, respectively, according to a motion of the user.

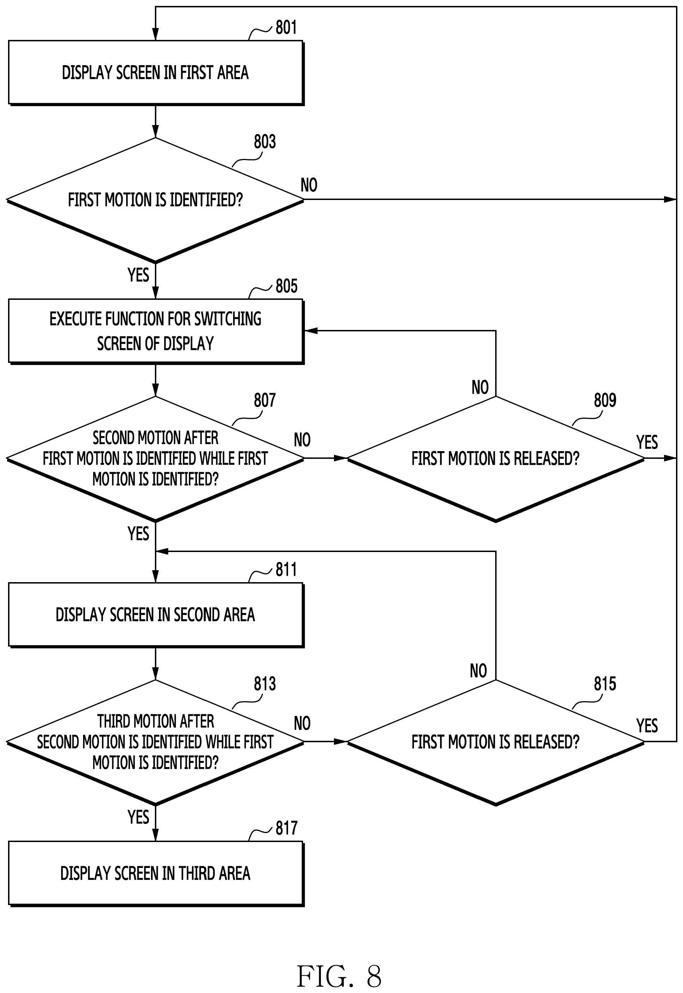

FIG. 8 is a flow chart illustrating operations of an exemplary wearable device.

Operations of FIG. 8 may be performed by the wearable device 200 of FIG. 2A and/or a processor 401.

Referring to FIG. 8, in operation 801, the processor 401 may be configured to display a screen in a first area (e.g., the first area 411 of FIG. 4A). For example, the processor 401 may control a display (e.g., the display 410 of FIG. 4A) coupled to a housing (e.g., the housing 210 of FIG. 2A) such that a screen including visual information is displayed in the first area 411 of the display 410.

In operation 803, the processor 401 may be configured to identify whether a first motion of a user is identified. For example, the processor 401 may be configured to identify the first motion corresponding to a grab of a hand (e.g., the hand 52 of FIG. 5A) of the user detected via a first sensor (e.g., the first sensor 421 of FIG. 4A). When the first motion is not identified (e.g., 803 - NO), the processor 401 may perform operation 801.

In operation 805, the processor 401 may be configured to execute a function for switching a screen of the display 410 based on identifying the first motion of the user. For example, the processor 401 may be configured to execute a function for changing an area for displaying a visual object of the display 410 based on identifying the first motion corresponding to a grab of the hand 52 of the user detected via the first sensor 421.

In operation 807, the processor 401 may identify whether a second motion after the first motion is identified while the first motion of the user is identified. For example, the processor 401 may be configured to identify the second motion corresponding to rotation of a wrist (e.g., the wrist 51 of FIG. 5A) of the user after the first motion via a second sensor (e.g., the second sensor 422 of FIG. 4A) while the first motion corresponding to a grab of the hand 52 of the user detected via the first sensor 421 is performed. When the second motion after the first motion is not identified by the processor 401 (e.g., 807 - NO), the processor 401 may perform operation 809.

In operation 809, the processor 401 may be configured to identify whether the first motion is released while the second motion after the first motion is not identified. For example, the processor 401 may be configured to identify release of the first motion based on identifying a motion (e.g., opening of the hand 52) for releasing the first motion corresponding to a grab of the hand 52 of the user. When release of the first motion is identified (e.g., 809 - YES), the processor 401 may perform operation 801. When release of the first motion is not identified (e.g., 809 - NO), the processor 401 may perform operation 805.

In operation 811, the processor 401 may be configured to display a screen in a second area (e.g., the second area 412 of FIG. 4A) of the display 410 based on identifying the second motion after the first motion. For example, the processor 401 may be configured to identify the second motion corresponding to rotation of the wrist 51 of the user after the first motion via the second sensor 422. The processor 401 may control the display 410 such that a screen including visual information is displayed in the second area 412 based on the second motion identified while the first motion is performed.

In operation 813, the processor 401 may be configured to identify whether a third motion after the second motion is identified while the first motion is identified. For example, the processor 401 may be configured to identify the third motion after the second motion corresponding to rotation of the wrist 51 of the user detected via the second sensor 422. When the third motion is not identified (e.g., 813 - NO), the processor 401 may perform operation 815.

In operation 815, the processor 401 may be configured to identify whether the first motion is released while the third motion after the second motion is not identified. For example, the processor 401 may be configured to identify release of the first motion based on identifying a motion (e.g., opening of the hand 52) for releasing the first motion corresponding to a grab of the hand 52 of the user. When release of the first motion is identified (e.g., 815 - YES), the processor 401 may perform operation 801. When release of the first motion is not identified (e.g., 815 - NO), the processor 401 may perform operation 811.

In operation 817, the processor 401 may be configured to display a screen in a third area (e.g., the third area 413 of FIG. 4A) of the display 410 based on identifying the third motion after the second motion while the first motion is performed. For example, the processor 401 may be configured to identify the third motion corresponding to rotation of the wrist 51 of the user after the second motion via the second sensor 422. The processor 401 may control the display 410 such that a screen including visual information is displayed in the third area 413 based on the third motion identified while the first motion is performed.

According to the embodiment described above, a wearable device (e.g., the wearable device 200 of FIG. 2A) may comprise a housing (e.g., the housing 210 of FIG. 2A), and a display (e.g., the display 220 of FIG. 3 or the display 410 of FIG. 4A) including a first area (e.g., the first area 411 of FIG. 4A) coupled to the housing and a second area (e.g., the second area 412 of FIG. 4A) extending from the first area and configured to at least partially surround a wrist (e.g., the wrist 51 of FIG. 5A) of a user while the wearable device is worn by the user. The wearable device may comprise at least one sensor (e.g., the at least one sensor 420 of FIG. 4A) to detect a motion of the user, memory (e.g., the memory 402 of FIG. 4A) storing instructions, and a processor (e.g., the processor 401 of FIG. 4A). The instructions, when executed by the processor, may cause the wearable device to, based on identifying a first motion of the user detected via the at least one sensor while visual information is displayed in the first area, execute a function for switching a screen of the display. The instructions, when executed by the processor, may cause the wearable device to, based on identifying a second motion of the user after the first motion detected via the at least one sensor, display the visual information in the second area.

For example, the instructions, when executed by the processor, may cause the wearable device to identify the first motion corresponding to a grab of the user via the at least one sensor. The instructions, when executed by the processor, may cause the wearable device to, while maintenance of the first motion is identified, identify a second motion corresponding to rotation of the wrist of the user after the first motion via the at least one sensor.

For example, the display may further comprise a third area (e.g., the third area 413 of FIG. 4A) extending from another end (e.g., the another end 412b of FIG. 4D) of the second area opposite to an end (e.g., the end 412a of FIG. 4D) of the second area and configured to be coupled with the housing, the end being connected to the first area. The instructions, when executed by the processor, may cause the wearable device to, based on identifying a third motion of the user after the second motion detected via the at least one sensor, display the visual information in the third area.

For example, the at least one sensor may include a first sensor (e.g., the first sensor 421 of FIG. 4A) for detecting the first motion, and a second sensor (e.g., the second sensor 422 of FIG. 4A) for detecting the second motion and the third motion. The instructions, when executed by the processor, may cause the wearable device to, while the first motion is detected via the first sensor, based on an angle between a reference axis and an axis representing an orientation of the wearable device within a first reference range, detected via the second sensor, control the display to display the visual information in the second area. The instructions, when executed by the processor, may cause the wearable device to, while the first motion is detected via the first sensor, based on the angle within a second reference range greater than the first reference range, detected via the second sensor, control the display to display the visual information in the third area.

For example, the instructions, when executed by the processor, may cause the wearable device to, based on identifying the first motion of the user detected via the at least one sensor, control the display to display a first screen related to an application executed by the wearable device via the first area. The instructions, when executed by the processor, may cause the wearable device to, based on identifying the second motion of the user after the first motion detected via the at least one sensor, control the display to display, in the second area, a second screen, different from the first screen, related to the application.

For example, the second screen may further comprise additional information related to the application than the first screen.

For example, the instructions, when executed by the processor, may cause the wearable device to, based on identifying the first motion of the user detected via the at least one sensor, control the display to cease to display the visual information in the first area. The instructions, when executed by the processor, may cause the wearable device to, while maintenance of the first motion is identified, based on the second motion corresponding to rotation of the wrist of the user after the first motion detected via the at least one sensor, identify an angle (e.g., the angle a of FIG. 4C) between a reference axis (e.g., the reference axis 452 of FIG. 4C) and an axis (e.g., the orientation axis 451 of FIG. 4C) representing an orientation of the wearable device. The instructions, when executed by the processor, may cause the wearable device to, based on the identified angle, control the display to change a size of a screen of the second area displaying visual information according to a magnitude of the angle.

For example, the instructions, when executed by the processor, may cause the wearable device to, while identifying the second motion of the user after the first motion, based on identifying that the first motion has been released via the at least one sensor, control the display to cease to display the visual information in the second area.

For example, the instructions, when executed by the processor, may cause the wearable device to, based on identifying the first motion of the user detected via the at least one sensor, identify whether the second motion is detected after the first motion. The instructions, when executed by the processor, may cause the wearable device to, based on identifying that the second motion is not detected during a preset period, control the display to cease to display a screen in the first area.

For example, the instructions, when executed by the processor, may cause the wearable device to, based on identifying the second motion corresponding to rotation of the wrist in a first rotation direction (e.g., the first rotation direction 511 of FIG. 5B) of the user after the first motion via the at least one sensor, display the visual information in the second area. The instructions, when executed by the processor, may cause the wearable device to, based on identifying a fourth motion corresponding to rotation of the wrist in a second rotation direction (e.g., the second rotation direction 512 of FIG. 5C) opposite to the first rotation direction of the user after the second motion via the at least one sensor, display the visual information in the first area.

For example, the wearable device may further comprise a first fastening portion (e.g., the first fastening portion 431 of FIG. 4B) coupled to an end (e.g., the end 410a of FIG. 4B) of the display, and a second fastening portion (e.g., the second fastening portion 432 of FIG. 4B) configured to be detachably coupled to the first fastening portion and coupled to another end (e.g., the another end 410b of FIG. 4B) opposite to the end of the display.

For example, the wearable device may further comprise communication circuitry (e.g., the communication circuitry 403 of FIG. 4A). The instructions, when executed by the processor, may cause the wearable device to, based on identifying the second motion of the user after the first motion detected via the at least one sensor, perform an event for executing a function corresponding to a combination of the first motion and the second motion of an external electronic device (e.g., the electronic device 101 of FIG. 1) connected to the wearable device via the communication circuitry.

For example, the second area may extend from an end of the first area. The display may further comprise a fourth area (e.g., the fourth area 414 of FIG. 4B) extending from another end opposite to the end of the first area and configured to surround the wrist of the user together with the second area.

For example, the display may further comprise a third area including a first portion extending from the second area and forming an end of the display, and a second portion extending from the fourth area and forming another end opposite to the end of the display, and the instructions, when executed by the processor, may cause the wearable device to, based on identifying the second motion corresponding to rotation of the wrist in a first rotation direction of the user after the first motion via the at least one sensor, display the visual information in the second area. The instructions, when executed by the processor, may cause the wearable device to, based on identifying the third motion corresponding to rotation of the wrist in the first rotation direction after the second motion via the at least one sensor, display the visual information in the third area.

For example, the second area may be deformable by having elasticity.

According to an embodiment, a wearable device may comprise a display including a first area and a second area extending from the first area and configured to at least partially surround a wrist of a user while the wearable device is worn by the user. The wearable device may comprise at least one sensor to detect a motion of the user, memory storing instructions, and a processor. The instructions, when executed by the processor, may cause the wearable device to, based on identifying a first motion corresponding to a grab of the user detected via the at least one sensor while visual information is displayed in the first area, execute a function for switching a screen of the display. The instructions, when executed by the processor, may cause the wearable device to, based on identifying a second motion corresponding to rotation of the wrist of the user in a first rotation direction after the first motion detected via the at least one sensor, display the visual information in the second area.

For example, the display may further include a third area extending from another end of the second area opposite to an end of the second area, the end being connected to the first area. The instructions, when executed by the processor, may cause the wearable device to, based on identifying a third motion corresponding to rotation of the wrist of the user in the first rotation direction after the second motion detected via the at least one sensor, display the visual information in the third area.

For example, the instructions, when executed by the processor, may cause the wearable device to, based on identifying the first motion of the user detected via the at least one sensor, control the display to display a first screen related to an application executed by the wearable device via the first area. The instructions, when executed by the processor, may cause the wearable device to, based on identifying the second motion of the user after the first motion detected via the at least one sensor, control the display to display, in the second area, a second screen, different from the first screen, related to the application.

For example, the instructions, when executed by the processor, may cause the wearable device to, based on identifying the first motion of the user detected via the at least one sensor, control the display to cease to display the visual information in the first area. The instructions, when executed by the processor, may cause the wearable device to, while maintenance of the first motion is identified, based on the second motion corresponding to rotation of the wrist of the user after the first motion detected via the at least one sensor, identify an angle between a reference axis and an axis representing an orientation of the wearable device. The instructions, when executed by the processor, may cause the wearable device to, based on the identified angle, control the display to change a size of a screen of the second area displaying visual information according to a magnitude of the angle.

For example, the instructions, when executed by the processor, may cause the wearable device to, while identifying the second motion of the user after the first motion, based on identifying that the first motion has been released via the at least one sensor, control the display to cease to display the visual information in the second area.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device (200) comprising:
a housing (210);
a display (410) including a first area (411) coupled to the housing (210), and a second area (412) extending from the first area (411) and configured to at least partially surround a wrist (51) of a user while the wearable device (200) is worn by the user;
at least one sensor (420) to detect a motion of the user;
memory (402) storing instructions; and
a processor (401);
wherein the instructions, when executed by the processor (401), cause the wearable device (200) to:
based on identifying a first motion of the user detected via the at least one sensor (420) while visual information is displayed in the first area (411), execute a function for switching a screen of the display (410),
based on identifying a second motion of the user while the first motion detected via the at least one sensor (420) is maintained, display the visual information in the second area (412).

2. The wearable device (200) of claim 1, wherein the instructions, when executed by the processor (401), cause the wearable device (200) to:
identify the first motion corresponding to a grab of the user via the at least one sensor (420),
while maintenance of the first motion is identified, identify a second motion corresponding to rotation of the wrist (51) of the user after the first motion via the at least one sensor (420).

3. The wearable device (200) of claim 1 or 2, wherein the display (410) further comprises a third area (413) extending from another end (412b) of the second area (412) opposite to an end (412a) of the second area (412) and configured to be coupled with the housing (210), the end (412a) being connected to the first area (411),
wherein the instructions, when executed by the processor (401), cause the wearable device (200) to:
based on identifying a third motion of the user after the second motion detected via the at least one sensor (420), display the visual information in the third area (413).

4. The wearable device (200) of claim 3, wherein the at least one sensor (420) includes,
a first sensor (421) for detecting the first motion; and
a second sensor (422) for detecting the second motion and the third motion,
wherein the instructions, when executed by the processor (401), cause the wearable device (200) to:
while the first motion is detected via the first sensor (421), based on an angle (θ) between a reference axis (452) and an axis (451) representing an orientation of the wearable device (200) within a first reference range, detected via the second sensor (422), control the display (410) to display the visual information in the second area (412),
while the first motion is detected via the first sensor (421), based on the angle (θ) within a second reference range greater than the first reference range, detected via the second sensor (422), control the display (410) to display the visual information in the third area (413).

5. The wearable device (200) of any one of claim 1 to 4,
wherein the instructions, when executed by the processor (401), cause the wearable device (200) to:
based on identifying the first motion of the user detected via the at least one sensor (420), control the display (410) to display a first screen related to an application executed by the wearable device (200) via the first area (411),
based on identifying the second motion of the user after the first motion detected via the at least one sensor (420), control the display (410) to display, in the second area (412), a second screen, different from the first screen, related to the application.

6. The wearable device (200) of claim 5, wherein the second screen further comprises additional information related to the application than the first screen.

7. The wearable device (200) of any claim of 1 to 6,
wherein the instructions, when executed by the processor (401), cause the wearable device (200) to:
based on identifying the first motion of the user detected via the at least one sensor (420), control the display (410) to cease to display the visual information in the first area (411),
while maintenance of the first motion is identified, based on the second motion corresponding to rotation of the wrist (51) of the user after the first motion detected via the at least one sensor (420), identify an angle (θ) between a reference axis (452) and an axis (451) representing an orientation of the wearable device (200),
based on the identified angle, control the display (410) to change a size of a screen of the second area (412) displaying visual information according to a magnitude of the angle.

8. The wearable device (200) of any one of claims 1 to 7,
wherein the instructions, when executed by the processor (401), cause the wearable device (200) to:
while identifying the second motion of the user after the first motion, based on identifying that the first motion has been released via the at least one sensor (420), control the display (410) to cease to display the visual information in the second area (412).

9. The wearable device (200) of any one of claims 1 to 8,
wherein the instructions, when executed by the processor (401), cause the wearable device (200) to:
based on identifying the first motion of the user detected via the at least one sensor (420), identify whether the second motion is detected after the first motion,
based on identifying that the second motion is not detected during a preset period, control the display (410) to cease to display a screen in the first area (411).

10. The wearable device (200) of any one of claims 1 to 9,
wherein the instructions, when executed by the processor (401), cause the wearable device (200) to:
based on identifying the second motion corresponding to rotation of the wrist (51) of the user in a first rotation direction (511) after the first motion via the at least one sensor (420), display the visual information in the second area (412),
based on identifying a fourth motion corresponding to rotation of the wrist (51) of the user in a second rotation direction (512) opposite to the first rotation direction (511) after the second motion via the at least one sensor (420), display the visual information in the first area (411).

11. The wearable device (200) of any one of claims 1 to 10, further comprising:
a first fastening portion (431) coupled to an end (410a) of the display (410); and
a second fastening portion (432) configured to be detachably coupled to the first fastening portion (431) and coupled to another end (410b) opposite to the end (410a) of the display (410).

12. The wearable device (200) of any one of claims 1 to 11, further comprising communication circuitry (403),
wherein the instructions, when executed by the processor (401), cause the wearable device (200) to:
based on identifying the second motion of the user after the first motion detected via the at least one sensor (420), perform an event for executing a function corresponding to a combination of the first motion and the second motion of an external electronic device (101) connected to the wearable device (200) via the communication circuitry (403).

13. The wearable device (200) of any one of claims 1 to 12,
wherein the second area (412) extends from an end (411a) of the first area (411),
wherein the display (410) further comprises a fourth area (414) extending from another end (411b) opposite to the end (411a) of the first area (411) and configured to surround the wrist (51) of the user together with the second area (412).

14. The wearable device (200) of claim 13,
wherein the display (410) further comprises a third area (413) including a first portion (413a) extending from the second area (412) and forming an end (410a) of the display (410), and a second portion (413b) extending from the fourth area (414) and forming another end (410b) opposite to the end (410a) of the display (410),
wherein the instructions, when executed by the processor (401), cause the wearable device (200) to:
based on identifying the second motion corresponding to rotation of the wrist (51) of the user in a first rotation direction (511) after the first motion via the at least one sensor (420), display the visual information in the second area (412),
based on identifying the third motion corresponding to rotation of the wrist (51) in the first rotation direction (511) after the second motion via the at least one sensor (420), display the visual information in the third area (413).

15. The wearable device (200) of any one of claims 1 to 14,
wherein the second area (412) is deformable by having elasticity.
